# FASCICULE DE BREVET EUROPEEN

(11) **EP 0 634 213 B1**
(45) Date de publication et mention de la délivrance du brevet: **29.12.1999**
(21) Numéro de dépôt: 94401465.3
(22) Date de dépôt: 28.06.1994
(51) Int. Cl.: B01J 35/06, B01J 35/04

(54) **Catalyseur comprenant un assemblage d'au moins un fil et son utilisation en combustion ou en post-combustion**
Eine Anordnung von mindestens einen drahteinbehaltendem Katalysator und seine Verwendung für die Verbrennung oder die Nachverbrennung
Catalyst containing an assebly of at least one thread and use thereof for combustion or post-combustion

(30) Priorité: 13.07.1993 FR 9308742
(43) Date de publication de la demande: 18.01.1995
(73) Titulaire: INSTITUT FRANCAIS DU PETROLE, 92502 Rueil-Malmaison (FR)
(72) Inventeur: Le Page, Jean-François, F-92500 Rueil Malmaison (FR); Mabilon, Gil, F-78420 Carrieres Sur Seine (FR)

(56) Documents cités:
- EP-A- 0 053 884
- EP-A- 0 505 832
- GB-A- 2 029 720
- GB-A- 2 045 637
- GB-A- 2 065 494
- GB-A- 2 122 914

## Description

L'invention concerne un catalyseur comprenant un assemblage d'au moins un fil contenant du fer, du chrome et de l'aluminium, sur lequel au moins un métal choisi dans le groupe formé par le platine, le rhodium, le palladium, le ruthénium, l'iridium, l'or et l'argent est déposé, l'assemblage consistant en une réunion du ou des fil(s) de telle façon que ladite réunion forme un ensemble solidaire mécaniquement qui a été mis en forme de façon organisée, c'est-à-dire de façon non aléatoire. Ainsi, si l'assemblage comprend au moins deux fils, chaque fil est en contact avec au moins un autre fil de façon organisée et solidaire.

L'invention concerne de préférence le cas où ledit assemblage a été fait par tricotage et/ou tissage.

L'invention concerne aussi l'utilisation dudit catalyseur pour la catalyse de combustion ou de post-combustion. Les catalyseurs de combustion ou de post-combustion comprennent des supports à base de céramique, lesquels ont l'avantage de présenter une résistance à la température importante (jusqu'à 1400 à 1500°C) mais une résistance mécanique faible, ou des supports à base métallique, lesquels ont l'avantage de présenter une résistance mécanique importante mais une résistance à la température un peu plus faible (jusqu'à 1200 à 1300 °C seulement).

Le support à base métallique peut se présenter sous forme de feuillards métalliques qui sont mis en forme soit par enroulement, soit par empilement, de façon à former un substrat qui subit généralement un brasage ou un soudage puis l'enduction d'au moins un oxyde tel que un oxyde d'aluminium ou un oxyde de cérium avant le dépôt d'au moins un métal qui catalyse les réactions de combustion ou de post-combustion.

Le support à base métallique tel que décrit dans les brevets US-A-4 330 436 et US-A-4 397 772 est constitué d'au moins un fil de surface relativement lisse mis sous forme tridimensionnelle aérée (spire ou hélice), le contact entre les différentes parties du fil étant évité au maximum et une couche comprenant au moins un élément catalytique ayant été partiellement déposée sur la surface du fil mis en forme. Les fils sont réunis de telle façon que des fils voisins ne s'interpénètrent pas, et la réunion des fils juxtaposés est répartie dans un récipient qui possède des ouvertures d'entrée et de sortie de gaz, les dimensions de chaque fil étant très petites par rapport aux dimensions du récipient. Une mise en forme préférée de fil est la forme hélicoïdale qui permet plusieurs possibilités d'assemblages ultérieurs.

Les demandes de brevet GB-A-2 045 637 et GB-A-2 065 494 décrivent un catalyseur qui est sous forme d'un tissu métallique. Les fils formant le tissu peuvent être en un alliage de fer, chrome et aluminium. La préparation du catalyseur prévoit un traitement oxydant du tissu pour générer une couche d'alumine à la surface des fils par oxydation d'une partie de l'aluminium présent dans l'alliage. La composition catalytique est ensuite déposée sur le tissu.

La présente invention propose un procédé de fabrication d'un catalyseur formé d'un support comprenant au moins un fil à base de fer, de chrome et d'aluminium sur lequel a été déposé au moins un métal possédant une activité catalytique en combustion ou en post-combution, ledit métal étant choisi dans le groupe formé par le platine, le rhodium, le palladium, le ruthénium, l'iridium, l'or et l'argent, ledit procédé étant caractérisé en ce que au moins une partie de l'assemblage est soumis, préalablement à sa formation, à un dépôt d'aluminium suivi d'un re-tréfilage, de manière à enrober le dit fil d'une couche de 10 à 50 µm d'aluminium, l'aluminium ainsi déposé étant au moins en partie transformé en alumine. Le dépôt dudit métal peut éventuellement être précédé ou accompagné du dépôt sur ledit assemblage d'une couche de matériaux poreux dite couche d'enduction constituée essentiellement d'au moins un composé choisi dans le groupe formé par les oxydes d'aluminium, les oxydes de cérium, les oxydes de titane, les oxydes de silicium, les oxydes de vanadium, ladite couche comprenant éventuellement au moins un composé d'un élément choisi dans le groupe formé par le lanthane, le baryum, le fer et le zirconium.

Le fil utilisé pour l'assemblage comprend, en % poids, de 60 à 90 %, de préférence de 70 à 80 % de fer, de 10 à 25 %, de préférence de 15 à 23 % de chrome, jusqu'à 10 %, de préférence jusqu'à 6% d'aluminium. Le contour extérieur de la section du fil est inclus dans la couronne définie comme l'aire comprise entre un cercle de diamètre 90 µm et un cercle de diamètre 5 mm. De préférence, le fil a une section de forme sensiblement circulaire, mais il peut aussi avoir une section de forme plus ou moins aplatie, par exemple de forme sensiblement elliptique. Dans le cas d'une forme sensiblement elliptique, le grand axe de l'ellipse a ainsi une longueur au maximum égale à 5 mm. Le fil a une longueur au moins égale à 20 cm, de préférence au moins égale à 50 cm, de façon à pouvoir réaliser l'assemblage. Dans le cas où l'assemblage comprend au moins deux fils, chaque fil compris dans l'assemblage peut être identique ou différent de chacun des autres fils compris dans l'assemblage.

Par assemblage de fils, on entend la réunion d'au moins un fil, de telle façon que ladite réunion forme un ensemble solidaire mécaniquement qui a été mis en forme de façon organisée, c'est-à-dire de façon non aléatoire. Il peut s'agir de la réunion d'au moins deux fils ensemble de telle sorte que chaque fil est en contact avec au moins un autre fil de façon organisée, c'est-à-dire de façon non aléatoire, et solidaire, et que ladite réunion de fils forme un ensemble solidaire mécaniquement. Mais il se peut aussi que l'assemblage soit constitué d'un seul fil auquel on donne une structure organisée à deux ou trois dimensions, solidaire mécaniquement, grâce à un tricotage par exemple.

Dans le cas où l'assemblage comprend au moins deux fils, il consiste donc principalement en une mise en forme de l'ensemble des fils préalablement séparés, de telle façon que des fils voisins, c'est-à-dire des fils qui sont en contact au moins partiellement, puissent s'interpénétrer. Une simple juxtaposition de fils séparés, chaque fil étant éventuellement mis préalablement en forme par exemple sous forme de spire ou d'hélice, telle que l'on exclut quasiment que des fils voisins puissent s'interpénétrer au moins partiellement, n'entre donc pas dans le cadre de la présente invention.

Un des assemblages préférés de la présente invention est le tissage d'au moins un fil de façon à obtenir un tissu qui est une structure organisée plus ou moins plane ainsi qu'il est connu dans le domaine du textile. Dans le cas de l'utilisation d'au moins deux fils, ce tissage peut être réalisé par exemple avec des fils sensiblement identiques, droits ou ondulés, et sensiblement de même diamètre dans le cas de fils de section sensiblement circulaire. Il est possible ensuite de faire subir au moins une modification audit tissu telle que un gaufrage partiel, c'est-à-dire un modelage de façon à ce que le tissu sous forme plus ou moins plane présente des aspérités ou des rugosités apparentes sur au moins une de ses faces, ces aspérités ou rugosités pouvant être de forme quelconque. Il est possible que l'assemblage ne soit que partiellement un tissage.

Un autre des assemblages préférés de la présente invention est le tricotage d'au moins un fil de façon à obtenir une structure à deux et/ou à trois dimensions. Par exemple, il est possible d'obtenir une structure relativement plane ou une structure en forme de "chaussette", c'est-à-dire une structure pouvant au moins en partie habiller une forme cylindrique. Dans le cas de l'utilisation d'au moins deux fils, ce tricotage peut par exemple être réalisé avec des fils sensiblement identiques, droits ou ondulés, et sensiblement de même diamètre dans le cas de fils de section sensiblement circulaire. Il est possible que l'assemblage ne soit que partiellement un tricotage.

Pour les deux assemblages préférés de la présente invention, c'est-à-dire le tissage et le tricotage, dans le cas de l'utilisation d'au moins deux fils, les fils utilisés ont de préférence une section de taille voisine. En effet, le contour extérieur de chaque section de fil peut être considéré comme compris dans la couronne définie comme l'aire comprise entre un cercle de petit diamètre et un cercle de grand diamètre. Dire que les fils ont une "section de taille voisine" signifie que les deux points suivants sont vérifiés :
1) la longueur du plus petit diamètre de petit cercle de fil appartenant à l'ensemble des fils utilisés n'est pas inférieure à 50 % de la longueur du plus grand diamètre de petit cercle de fil appartenant audit ensemble, et,
2) la longueur du plus petit diamètre de grand cercle de fil appartenant audit ensemble n'est pas inférieure à 50 % de la longueur du plus grand diamètre de grand cercle de fil appartenant audit ensemble. Il se peut de plus que l'on alterne lors de la mise en forme des fils de section de taille voisine mais différente dans le cas du tissage par exemple il peut être préférable, pour assurer lors de l'utilisation une meilleure distribution de gaz, d'avoir un tissu comportant périodiquement (une fois sur cinq par exemple) un fil de section de taille différente des autres fils qui ont des sections sensiblement identiques.

Dans le cas de l'utilisation d'au moins deux fils, toute combinaison de fils lors de la mise en forme telle que tout fil soit au moins réuni à un autre fil de façon solidaire est comprise dans la présente invention.

L'assemblage selon l'invention est précédé d'un dépôt d'aluminium sur au moins une partie dudit assemblage. Le dépôt d'aluminium se fait à partir d'un fil de composition définie ci-dessus, de préférence dégraissé et séché. Le fil, propre de préférence, est trempé en continu dans un bain d'aluminium en fusion, puis retréfilé à travers une filière. Ces opérations permettent l'enrobage sur le coeur du fil d'une couche de 10 à 50 µm d'aluminium. Le re-tréfilage peut avoir notamment pour effet de provoquer un début d'ancrage de l'aluminium dans la couche supérieure du fil. Il peut être avantageux de provoquer une diffusion plus profonde de l'aluminium vers le coeur du fil. Pour cela, on chauffe le fil à une température pouvant aller jusqu'à environ 900 à 1000°C, de préférence en atmosphère inerte ou réductrice.

Le dépôt d'au moins un métal possédant une activité catalytique est effectué par tout procédé connu de l'homme du métier. Il peut être effectué par imprégnation. Il est possible par exemple d'imprégner une solution d'au moins un composé de métal choisi dans le groupe formé par le platine, le rhodium, le palladium, le ruthénium, l'iridium, l'argent et l'or tel que par exemple le dinitrosodiammino platine, le nitrate de palladium, le nitrate de palladium diammine, le dinitrosodiammino palladium, le nitrate de rhodium, le trinitrosotriammino rhodium. L'imprégnation est effectuée par trempage de l'assemblage dans une solution comprenant au moins un composé tel que décrit ci-dessus, suivi d'un égouttage pour éliminer l'excédent de solution et d'un traitement thermique à une température maximale généralement comprise entre 250 et 650°C, de préférence entre 400 et 600°C.

Afin d'augmenter la concentration totale de métal déposé pour améliorer l'efficacité du catalyseur, il peut être préférable de déposer sur l'assemblage, avant le dépôt de métal tel que décrit ci-dessus, une couche de matériaux poreux à base d'au moins un composé choisi dans le groupe formé par les oxydes d'aluminium, les oxydes de cérium, les oxydes de titane, les oxydes de silicium, les oxydes de vanadium, et éventuellement d'au moins un composé d'un élément choisi dans le groupe formé par le lanthane, le baryum, le fer et le zirconium. Ce dépôt est obtenu par tout procédé connu de l'homme du métier. Il peut être préalable au dépôt d'au moins un métal possédant une propriété catalytique, mais il peut aussi être effectué au cours dudit dépôt de métal. Il peut par exemple être obtenu par trempage de l'assemblage dans une suspension aqueuse d'au moins une poudre de composé tel que défini ci-dessus. La densité, le pH, la viscosité de la suspension et la granulométrie de la fraction sèche sont ajustés pour obtenir un bon écoulement de la suspension sur le ou les fil(s) compris dans l'assemblage. Après trempage, on procède à l'élimination de la fraction excédentaire par exemple par égouttage, puis l'assemblage subit au moins un traitement thermique à une température maximale comprise entre 350 et 800°C, de préférence entre 400 et 600°C. L'assemblage enduit peut être avantageusement imprégné par au moins une solution comprenant au moins un métal possédant une propriété catalytique tel que décrit ci-dessus, de façon à obtenir une concentration totale de métal déposé comprise entre 0,032 et 3g par litre d'assemblage, de préférence entre 0,1 et 1,5g par litre d'assemblage.

Préalablement à l'étape de dépôt de métal tel que décrit ci-dessus, éventuellement précédé et/ou accompagné du dépôt d'une couche d'enduction, l'assemblage est éventuellement soumis à une succession d'étapes de traitements, dans le cas de l'utilisation en combustion ou en post-combustion selon l'invention. Plusieurs successions d'étapes possibles sont envisagées dans le cadre de la présente invention.

Une première succession possible d'étapes comprend au moins les étapes successives décrites ci-après.
· Etape a)
   Au moins un assemblage est enroulé de manière à obtenir au moins un cylindre. L'enroulement de l'assemblage est réalisé en considérant que l'un des bords de l'assemblage est l'axe autour duquel on procède à l'enroulement dans le cas où l'assemblage à partir duquel on fait l'enroulement peut être grossièrement considéré comme une structure à deux dimensions. Dans le cas où ledit assemblage est plutôt considéré de façon grossière comme une structure à trois dimensions, on essaie de définir un axe d'enroulement qui est au moins une droite tangente audit assemblage ; il peut être préférable d'aplatir en partie cette structure à trois dimensions en une structure que l'on peut grossièrement considérer comme une structure à deux dimensions avant de procéder à l'enroulement. Par exemple, dans le cas d'un tricotage sous la forme d'une chaussette, il est possible d'aplatir au moins partiellement la structure avant de procéder à l'enroulement, mais il est aussi possible de procéder à l'enroulement directement à partir de la forme à trois dimensions. Selon l'intensité de la force avec laquelle on procède à l'enroulement, le cylindre obtenu a une fraction de vide plus ou moins importante. Mais il peut aussi avoir une fraction de vide hétérogène, par exemple lorsque la force avec laquelle on a procédé à l'enroulement a varié au cours du temps ; par exemple la fraction de vide peut décroître de l'extérieur à l'intérieur dudit cylindre.
   Il est aussi possible de superposer plusieurs structures, c'est-à-dire au moins deux structures, de façon à les enrouler simultanément. Selon un mode de réalisation préféré, deux tissus peuvent être superposés et enroulés simultanément, l'un légèrement gaufré, l'autre quasiment plan ; on obtient ainsi un support à canaux communiquant entre eux latéralement.
   Le cylindre obtenu a de préférence soit une forme allongée de longueur comprise entre 50 et 250 mm, et dont la section a un contour extérieur compris dans la couronne définie comme l'aire comprise entre un petit cercle de diamètre compris entre 60 et 100 mm et un grand cercle de diamètre compris entre 100 et 200 mm, soit une forme cylindrique de longueur comprise entre 50 et 250 mm ayant une section circulaire de diamètre compris entre 25 et 200 mm.
   Toute sorte de forme à trois dimensions peut être obtenue. On utilise la dénomination cylindre en raison de la forme particulière obtenue lorsque l'on enroule un tissu plat et rectangulaire autour de l'un de ses bords, mais la notion de cylindre envisagée dans la présente invention déborde largement le cadre de la stricte définition géométrique de ce mot.
   Si l'on considère que la fraction de vide obtenue à l'issue de l'étape a) est convenable (91 à 99 % par exemple), il n'est pas nécessaire de procéder à l'étape b) telle que décrite ci-après.
· Etape b) (facultative)
   Au moins un cylindre est compressé de manière à réduire la fraction de vide jusqu'à une valeur comprise entre 91 et 99 %. Il est possible que la fraction de vide obtenue décroisse, même après compression, de l'extérieur à l'intérieur du cylindre.
   La forme cylindrique obtenue après compression est de préférence soit une forme allongée de longueur comprise entre 50 et 250 mm, et dont la section a un contour extérieur compris dans la couronne définie comme l'aire comprise entre un petit cercle de diamètre compris entre 60 et 100 mm et un grand cercle de diamètre compris entre 100 et 200 mm, soit un cylindre de longueur comprise entre 50 et 250 mm ayant une section circulaire de diamètre compris entre 25 et 200 mm. Le taux de compression, que l'on définit comme le rapport entre le volume de l'assemblage avant compression et le volume de l'assemblage après compression, est compris entre 1 et 10, de préférence entre 1 et 2 ; un taux de compression égal à 1 correspond en fait au cas où l'assemblage n'est pratiquement pas comprimé.
· Etape c)
   Au moins un cylindre éventuellement compressé subit un traitement visant à transformer une certaine partie de l'aluminium compris dans l'assemblage, généralement entre 10 et 80 % en poids de l'aluminium compris dans l'assemblage, en alumine. Le traitement peut être un traitement thermique ou un traitement par une base en solution aqueuse, voire un traitement d'oxydation en présence de mercure ; mais tout traitement connu de l'homme du métier peut aussi être utilisé. Le traitement thermique est essentiellement un traitement sous air sec ou humide, qui peut comprendre deux phases. La première phase éventuelle consiste à porter l'assemblage à une température généralement comprise entre 500 et 900 °C, l'atmosphère de traitement étant exempte d'oxygène (i.e. moins de 10² Pa d'oxygène), la pression totale pouvant être inférieure à la pression atmosphérique. Dans une seconde phase, l'assemblage est porté à une température comprise entre 800 et 1100°C, l'atmosphère de traitement contenant plus de 5 10² Pa d'oxygène. Cette seconde phase peut constituer l'intégralité du traitement thermique. Le traitement de l'aluminium peut aussi être effectué par introduction de l'assemblage dans une solution aqueuse basique, de pH compris entre 9 et 14, de préférence de pH compris entre 10 et 13, contenant par exemple au moins un hydroxyde alcalin ou alcalino-terreux et/ou de l'ammoniaque. Le traitement est effectué à une température comprise entre 10 et 110°C, de préférence à une température comprise entre 20 et 50°C, pour une durée de 1 minute à 50 heures, de préférence de 10 minutes à 20 heures. Après le traitement, l'assemblage est avantageusement lavé dans au moins un bain d'eau désionisée.
   Ainsi, on obtient au moins un cylindre éventuellement compressé et dont une certaine partie de l'aluminium s'est transformée en alumine.
· Etape d)
   Au moins un cylindre éventuellement compressé et contenant de l'alumine est introduit dans un tube adéquat pour constituer un pot catalytique; on veillera à éliminer les espaces vides trop importants entre la paroi du tube et ledit cylindre, qui pourraient constituer des passages préférentiels de gaz lors de l'utilisation du pot catalytique ainsi constitué. L'axe du cylindre et l'axe du tube sont sensiblement parallèles, de préférence sensiblement identiques.
   La forme adéquate du tube est de préférence soit une forme allongée de longueur comprise entre 50 et 250 mm, et dont la section a un contour extérieur compris dans la couronne définie comme l'aire comprise entre un petit cercle de diamètre compris entre 60 et 100 mm et un grand cercle de diamètre compris entre 100 et 200 mm, soit un cylindre de longueur comprise entre 50 et 250 mm ayant une section circulaire de diamètre compris entre 25 et 200 mm. Le tube comporte un axe qui est sensiblement un axe de symétrie, ainsi que deux ouvertures, sensiblement disposées suivant ledit axe, l'une pour l'entrée des gaz devant être transformés au sein dudit tube comportant le catalyseur selon l'invention et l'autre pour la sortie desdits gaz. Dans le cas de l'introduction d'au moins deux cylindres dans le tube, les cylindres sont disposés de telle façon que les axes du tube et des cylindres introduits dans le tube sont sensiblement parallèles. Dans une mise en oeuvre préférée, lesdits axes sont sensiblement identiques, c'est-à-dire que les cylindres se succèdent les uns derrière les autres selon l'axe du tube. Dans une mise en oeuvre encore plus préférée, les cylindres se succèdent les uns derrière les autres de telle façon que de l'ouverture destinée à l'arrivée des gaz à l'ouverture destinée à la sortie des gaz la fraction de vide des cylindres aille en décroissant, par exemple de 99 à 91 %, de préférence de 97 à 94 %. Le nombre de cylindres ainsi introduits dans le tube est compris entre 2 et 10, de préférence entre 2 et 5. Cet aménagement permet aux particules solides éventuellement présentes dans les gaz et plus spécialement aux suies de ne pas être bloquées dès l'entrée dans le tube mais de pouvoir diffuser plus profondément à l'intérieur du catalyseur. La tortuosité des canaux dans lesquels ces particules solides peuvent progresser augmente la probabilité qu'elles ont de heurter les fils du solide et de subir une combustion ou une post-combustion catalytique. Un tel dispositif est plus particulièrement adapté au traitement des gaz d'échappement issus des moteurs Diesel.
· Etape e)
   L'assemblage contenu dans le tube est rendu cohérent par au moins une des opérations suivantes : brasage, soudage, frittage. En effet, les gaz exercent une poussée à l'intérieur du tube qui peut provoquer une déformation de la structure au cours de l'utilisation. Une opération de brasage et/ou soudage et/ou frittage, selon toute technique connue de l'homme du métier, permet donc d'éviter une déformation excessive de l'assemblage pendant l'utilisation. L'opération de brasage peut être menée de la façon suivante : l'ensemble comprenant l'assemblage et le tube est mis en contact, généralement au niveau des extrémités dudit tube, avec une poudre ou une pâte à braser comprenant au moins 50 % en poids de nickel, puis ledit ensemble est traité, sous vide, à une température comprise entre 900 et 1200°C, pendant une durée comprise entre 1 minute et 10 heures, de préférence comprise entre 10 minutes et 1 heure.

Une deuxième succession d'étapes possible comprend au moins les étapes successives décrites ci-après.
a) au moins un assemblage est enroulé de manière à obtenir au moins un cylindre. Cette étape est identique à l'étape a) de la première succession d'étapes.
b) éventuellement au moins un cylindre est compressé. Cette étape est identique à l'étape b) de la première succession d'étapes.
c) au moins un cylindre éventuellement compressé est introduit dans un tube adéquat. L'introduction d'au moins un cylindre dans ledit tube se fait de la même façon que l'introduction d'au moins un cylindre décrite dans l'étape d) de la première succession d'étapes.
d) l'assemblage contenu dans le tube est rendu cohérent par au moins une des opérations suivantes : brasage, soudure, frittage. Cette étape se fait de manière identique à l'étape e) de la première succession d'étapes.
e) l'ensemble formé par le tube comprenant au moins un cylindre éventuellement compressé subit un traitement visant à transformer la majeure partie de l'aluminium compris dans l'assemblage en alumine. Le traitement se fait de la même façon que le traitement décrit dans l'étape c) de la première succession d'étapes.

L'invention concerne également le catalyseur préparé par le procédé décrit plus haut. Ce catalyseur comprend un assemblage d'au moins un fil qui comprend au moins, en % poids, entre 60 et 90 % de fer, entre 10 et 25 % de chrome, et jusqu'à 10 % de préférence jusqu'à 6% d'aluminium, au moins un métal choisi dans le groupe formé par le platine, le rhodium, le palladium, le ruthénium, l'iridium, l'or et l'argent ayant été déposé sur l'assemblage, le contour extérieur de la section du fil étant inclus dans la couronne dont l'aire est comprise entre un cercle de diamètre 90 µm et un cercle de diamètre 5 mm, la longueur du fil étant au moins égale à 20 cm, et l'assemblage étant solidaire mécaniquement; le catalyseur est tel que au moins une partie de l'assemblage est soumis, préalablement à sa formation, à un dépôt d'aluminium suivi d'un re-tréfilage, de manière à enrober le dit fil d'une couche de 10 à 50 µm d'aluminium, l'aluminium ainsi déposé étant au moins en partie transformé en alumine.

Ce catalyseur peut aussi être tel que l'assemblage est enduit avant le dépôt de métal ou au cours dudit dépôt, la couche d'enduction étant constituée principalement d'au moins un composé choisi dans le groupe formé par les oxydes d'aluminium, les oxydes de cérium, les oxydes de titane, les oxydes de silicium, les oxydes de vanadium et éventuellement comprenant au moins un composé d'un élément choisi dans le groupe formé par le lanthane, le baryum, le fer et le zirconium.

Une forme préférée de l'invention concerne un catalyseur tel que l'assemblage est soumis, préalablement à l'étape éventuelle d'enduction ou à l'étape de dépôt d'au moins un métal possédant une activité catalytique, à la succession d'étapes suivante : a) au moins un assemblage est enroulé de manière à obtenir au moins un cylindre b) au moins un cylindre subit un traitement visant à transformer une certaine partie de l'aluminium en alumine c) au moins un cylindre contenant de l'alumine est introduit dans un tube d) l'assemblage contenu dans le tube est rendu cohérent par une au moins des opérations suivantes : brasage, soudage ou frittage, une étape intermédiaire supplémentaire de compression du cylindre ayant été éventuellement effectuée entre les étapes a) et b) décrites ci-dessus.

Ainsi, une forme préférée de l'invention concerne donc un catalyseur à base d'au moins un fil renfermant du fer, du chrome et de l'aluminium, le fil étant assemblé par tricotage et'ou tissage, puis, après enroulement et compression l'aluminium soit transformée en alumine ; ensuite, après mise en forme dans un tube, l'assemblage est rendu cohérent par brasage et/ou/soudage et/ou frittage ; enfin, après dépôt éventuel d'une couche d'enduction, un métal possédant une activité catalytique est déposé sur l'assemblage.

Une autre forme préférée de l'invention concerne un catalyseur tel que l'assemblage est soumis, préalablement l'étape d'enduction ou à l'étape de dépôt d'au moins un métal possèdant une activité catalytique, à la succession d'étapes suivante :
a) au moins un assemblage est enroulé de manière à obtenir au moins un cylindre
b) au moins un cylindre est introduit dans un tube
c) l'assemblage présent dans le tube est rendu cohérent par l'une au moins des opérations suivantes : brasage, soudage ou frittage
d) l'assemblage présent dans le tube subit un traitement visant à transformer une certaine partie de l'aluminium en alumine, une étape intermédiaire supplémentaire de compression du cylindre ayant été éventuellement effectuée entre les étapes a) et b) décrites ci-dessus.

Ainsi, une autre forme préférée de l'invention concerne aussi un catalyseur à base d'au moins un fil renfermant du fer, du chrome et de l'aluminium , le fil étant assemblé par tricotage et/ou tissage, puis, après enroulement et compression éventuelle, l'assemblage est mis en forme dans un tube et rendu cohérent par brasage et/ou soudage et/ou frittage ; ensuite, l'assemblage est traité de façon à ce que une certaine partie de l'aluminium soit transformé en alumine ; enfin, après dépôt éventuel d'une couche d'enduction, au moins un métal possédant une activité catalytique est déposé sur l'assemblage.

Enfin, un des assemblages préférés selon l'invention est au moins partiellement un tricotage. Un autre des assemblages préférés selon l'invention est au moins partiellement un tissage.

Une utilisation du catalyseur selon l'invention concerne la catalyse de combustion. Une autre utilisation du catalyseur selon l'invention concerne la catalyse de post-combustion.

L'utilisation du pot catalytique dont des formes préférées selon l'invention sont décrites ci-dessus, grâce à l'obtention d'un écoulement des gaz plus turbulent que pour les utilisations de pots catalytiques décrits dans l'art antérieur, permet d'obtenir une meilleure conversion des polluants.

Les figures ci-jointes illustrent partiellement l'invention sans toutefois en limiter la portée.

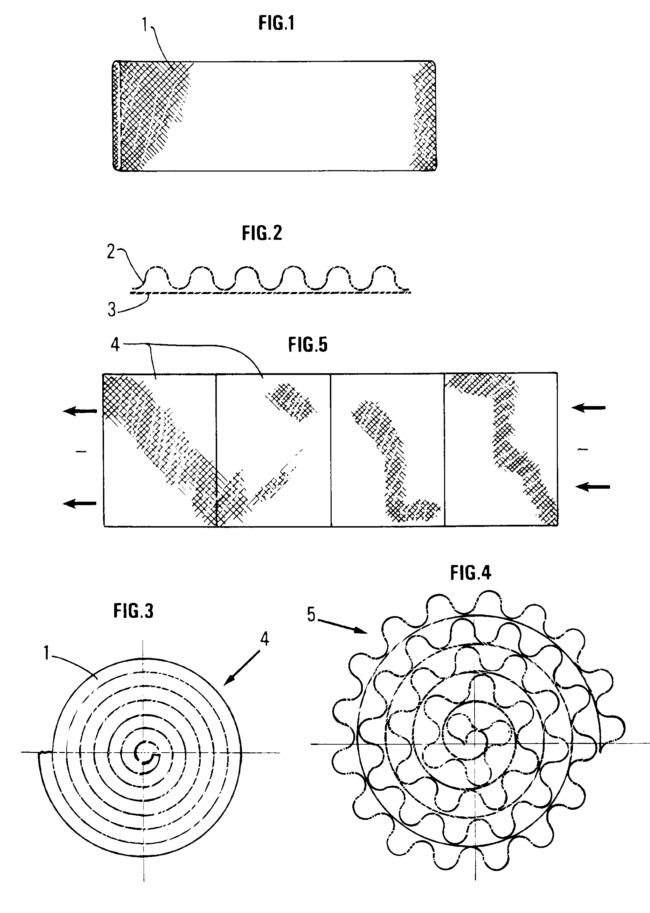

La figure 1 représente un des assemblages préférés de la présente invention qui correspond à une structure tricotée (1) sous forme de "chaussette". Les fils utilisés pour le tricotage de ladite chaussette ont dans le cas de la figure 1 sensiblement une taille identique.
La figure 2 présente une vue de profil d'un autre des assemblages préférés de la présente invention, à savoir deux tissus (2) et (3) dont l'un, (2), a subi un gaufrage partiel.
Les figures 3 et 4 présentent deux cylindres avant compression selon l'invention, l'un, (4), ayant été réalisé par enroulement de la chaussette de la figure 1, et l'autre, (5), ayant été réalisé à partir des tissus (2) et (3) qui ont été superposés (voir la figure 2) puis enroulés simultanément.
La figure 5 présente la façon dont on peut disposer plusieurs cylindres du type du cylindre (4) de la figure 3 au sein d'un tube (non représenté ici). Les cylindres sont disposés de préférence de telle sorte que les gaz rencontrent au cours de leur passage au sein du tube des cylindres à fraction de vide décroissante.

Les exemples qui suivent illustrent l'invention sans toutefois en limiter la portée.

### Exemple 1

Un fil de section circulaire et formé d'alliage fer-chrome à 80 % de fer et 20 % de chrome, de diamètre 0,4 mm est trempé dans un bain d'aluminium fondu puis retréfilé pour obtenir un fil dont la composition moyenne (en poids) est : fer : 76,2%, chrome : 19,0%, et aluminium 4,8%. Ce fil est tricoté sous forme d'un cylindre creux et ouvert de diamètre 100 mm. Ce cylindre est aplati entre deux rouleaux pour former une bande de largeur environ 140 mm. Cette bande est coupée à une longueur telle que sa masse soit de 238 g. Elle est ensuite enroulée sur elle-même à partir d'une extrémité pour former un cylindre de longueur 140 mm et de diamètre 100 mm soit un volume de 1100 cm³. La fraction de vide de ce cylindre est de 97 %.

Ce cylindre est placé dans un tube en alliage fer-chrome, à 17 % de chrome, de diamètre intérieur 100 mm, de longueur 150 mm et de 1,5 mm d'épaisseur, de telle sorte que chaque extrémité du tube dépasse le cylindre de environ 5 mm. Une pâte de brasure au nickel est déposée aux extrémités du cylindre. L'ensemble est ensuite introduit dans un four de traitement sous vide, dont la pression résiduelle est inférieure à 100 Pascal. La température est portée à 1100°C en 1,5 heure, puis maintenue à cette valeur pendant 1,5 heure. Elle est ensuite ramenée à 950°C en 1 heure et maintenue à cette valeur pendant 6 heures. Dans cette dernière étape, lorsque la température atteint 950°C, de l'air est progressivement introduit dans le four, de sorte que la pression partielle atteint la pression atmosphérique ambiante. Le four est ensuite refroidi jusqu'à la température ambiante, la pression d'air étant maintenue égale à la pression ambiante.

On prépare une suspension par introduction de 600 g de poudre d'alumine à 200 m²/g dans 1400 g d'eau, et acidification par l'acide acétique jusqu'à pH 4,5. La granulométrie moyenne de la suspension est ramenée de 15 à 2,5 µm par broyage dans un broyeur à billes. Le tube contenant le cylindre de fils et ayant subi le brasage et les traitements thermiques précédemment décrits, est plongé dans la suspension, puis égoutté et soufflé pour chasser l'excès de suspension mal fixé. II est ensuite introduit dans un four qui est porté à une température de 500°C en 2 heures, puis maintenu à cette température pendant 4 heures. L'opération est répétée deux fois de sorte que la masse d'alumine enduite atteigne 52g. La pièce enduite est ensuite plongée dans une solution de dinitrosodiammino platine, puis enlevée de la solution, égouttée et soufflée. Elle est ensuite introduite à l'air dans un four dont la température est portée à 500°C en 2 heures puis maintenue à cette température pendant 4 heures. Après refroidissement le tube contenant le cylindre de fils revêtu d'alumine et imprégné de platine constitue un pot catalytique contenant 1,165 g de platine et référencé A.

### Exemple 2

A partir d'un fil d'alliage fer(80 %)- chrome (20%) de diamètre 0,2 mm, on procède comme dans l'exemple 1 à un trempage dans un bain d'aluminium fondu puis à un re-tréfilage, pour obtenir un fil présentant la composition moyenne ci-après : fer 75.7%; chrome 18,9%; aluminium 5,4%. Ce fil est tissé sous forme d'une bande de largeur 150 mm. Cette bande est gaufrée par passage entre deux molettes créant des ondulations de profondeur 2 mm, espacées de 10 mm.

Cette bande est pliée en trois pour obtenir une nouvelle bande de largeur environ 50 mm formée de trois couches superposées. Cette nouvelle bande est coupée à une longueur telle que la masse de la partie coupée soit de 57 g ; elle est enroulée sur elle-même à partir d'une extrémité pour former un cylindre de diamètre 100 mm et de longueur environ 50 mm, soit un volume de environ 393 cm³. La fraction de vide de ce cylindre est de 98 %.

Deux autres cylindres sont préparés de manière identique mais la masse de la partie coupée est pour chacun d'eux de 85 g correspondant à une porosité de 97%.

Ces trois cylindres sont successivement introduits dans un tube en alliage fer-chrome à 17 % de chrome, de diamètre intérieur 100 mm, de longueur 160 mm et de 1,5 mm d'épaisseur, de sorte que les extrémités du tube dépassent celles des cylindres de environ 5 mm. Le cylindre de fraction de vide 98 % est placé à une extrémité du tube. La pièce ainsi fabriquée est ensuite traitée comme dans l'exemple 1, tout d'abord par application d'une pâte de brasure au nickel, puis traitement thermique à 1100 et 950°C sous vide puis en présence d'air.

Comme dans l'exemple 1 on prépare une suspension d'alumine dans de l'eau acidifiée par de l'acide acétique et on enduit la pièce contenant les trois cylindres. L'opération est répétée deux fois de sorte que la masse d'alumine enduite atteigne 88g.

Comme dans l'exemple 1, la pièce enduite est ensuite imprégnée par une solution de dinitrosodiammino platine, puis traitée sous air à 500°C pendant 2 heures. Le tube contenant les cylindres de fils revêtu d'alumine et imprégné de platine constitue un pot catalytique contenant 1,664 g de platine, et référencé B.

### Exemple 3

On utilise le même fil que dans l'exemple 2. Ce fil est tissé sous forme d'une bande de largeur 150 mm. Comme dans l'exemple 2, cette bande est pliée en trois pour obtenir une nouvelle bande de largeur 50 mm. Celle-ci est gaufrée par passage entre deux molettes créant des ondulations de profondeur 2 mm, espacées de 10 mm.

La composition élémentaire de la bande est alors 76,2 % de fer, 19,0 % de chrome et 4,8 % d'aluminium.

Cette bande est coupée à une longueur telle que sa masse soit de 56 g, puis enroulée pour former un cylindre de diamètre 100 mm et de longueur environ 50 mm, soit un volume de environ 393 cm³. La fraction de vide de ce cylindre est de 98 %.

Deux autres cylindres sont préparés de manière identique mais la masse de la partie coupée est pour chacun d'eux de 84 g correspondant à une porosité de environ 97 %.

Comme dans l'exemple 2, ces trois cylindres sont successivement introduits dans un tube en alliage fer-chrome de diamètre intérieur 100 mm, de longueur 160 mm, le cylindre de fraction de vide 98 % étant placé à une extrémité du tube.

Comme dans l'exemple 1 on prépare une suspension d'alumine dans de l'eau acidifiée par de l'acide acétique et on enduit la pièce contenant les trois cylindres. L'opération est répétée deux fois de sorte que la masse d'alumine enduite atteigne 86g.

La pièce est ensuite imprégnée par une solution de dinitrosodiammino platine de manière identique à la pièce décrite dans l'exemple 2, pour obtenir un pot catalytique contenant 1,664 g de platine référencé C.

### Exemple 4

Comme dans l'exemple 3 on prépare une bande de 150 mm de largeur, qui est pliée en trois, puis gaufrée.

Cette bande est coupée à trois longueurs différentes correspondant à des masses de 112, 84 et 56 g, conduisant après enroulement sous forme de cylindre de 100 mm de diamètre et de 50 mm de longueur à des fractions de vide respectivement de 96, 97 et 98 %.

Comme dans l'exemple 2, ces trois cylindres sont successivement introduits dans un tube en alliage fer-chrome de diamètre intérieur 100 mm et de longueur 160 mm, le cylindre de fraction de vide 97 % étant placé entre les deux autres.

Comme dans l'exemple 1 on prépare une suspension d'alumine dans de l'eau acidifiée par de l'acide acétique et on enduit la pièce contenant les trois cylindres. L'opération est répétée deux fois de sorte que la masse d'alumine enduite atteigne 84g.

La pièce est ensuite imprégnée par une solution de dinitrosodiammino platine de manière identique à la pièce décrite dans l'exemple 2, pour obtenir un pot catalytique contenant 1,664 g de platine, référencé D.

### Exemple 5

Comme dans l'exemple 4 on prépare une bande de 150 mm de largeur, qui est pliée en trois pour obtenir une nouvelle bande de 50 mm de largeur puis gaufrée.

Cette bande est coupée à une longueur correspondant à une masse de 27,4 g, conduisant après enroulement sous forme de cylindre de 70 mm de diamètre et de 50 mm de longueur à une fraction de vide de 98 %.

Ce cylindre est introduit dans un tube en alliage fer-chrome de diamètre intérieur 70 mm, de longueur 60 mm.

Comme dans l'exemple 1, l'ensemble est brasé puis traité sous vide à 1100°C puis sous air à 950°C.

On prépare une suspension par introduction de 500 g poudre d'alumine à 200 m²/g et de 100 g de poudre de cérine dans 1400 g d'eau, et acidification par l'acide acétique jusqu'à pH 4,5. La granulométrie moyenne de la suspension est ramenée de 18 µm à 2,5 µm par broyage dans un broyeur à billes. Comme dans l'exemple 1, le tube contenant les cylindres de fils est plongé dans la suspension, puis soufflé et porté à une température de 500°C pendant 4 heures. L'opération est répétée deux fois de sorte que la masse du revêtement d'alumine et de cérine atteigne 56 g.

La pièce est ensuite plongée dans une solution de dinitrosodiammino platine et de nitrate de rhodium, puis enlevée de la solution, égouttée et soufflée. Comme dans l'exemple 1, elle est ensuite introduite dans un four dont la température est portée à 500°C, puis maintenue à cette température pendant 4 heures. Après refroidissement on obtient un pot catalytique référencé E contenant 0,226 g de platine et 0,045 g de rhodium.

### Exemple 6

Les performances des pots catalytiques A à D sont déterminées sur un banc moteur équipé d'un moteur Diesel de 1,9 I de cylindrée fonctionnant à un régime de 2500 tours/min et une puissance de 15 kW. Les pots catalytiques sont implantés sur la ligne d'échappement à 1,5 mètre du collecteur. La température à l'entrée des pots catalytiques est de 320°C.

La conversion des polluants est exprimée par le rapport de la différence des concentrations entre l'amont et l'aval du catalyseur sur la concentration en amont du catalyseur. Elle nécessite la mesure de la concentration en polluants en amont et en aval du catalyseur.

La concentration en hydrocarbures est déterminée à l'aide d'un analyseur à ionisation de flamme.

La concentration en particules est déterminée à partir de la prise de poids d'un filtre maintenu à 52°C et balayé par un mélange de gaz d'échappement et d'air préparé dans un microtunnel de dilution.

La détermination de la concentration des particules est faite à l'aide d'un microtunnel de dilution et d'un filtre thermostaté. Une partie du gaz d'échappement est mélangée à de l'air dans le microtunnel de dilution puis envoyée sur le filtre dont la prise de poids permet de remonter au débit massique de particules et à leur concentration.

Le tableau suivant présente les résultats obtenus pour les 4 pots catalytiques A à D.

| Référence du pot catalytique | Conversion des HC | Conversion des particules |
|---|---|---|
| A | 66 % | 25 % |
| B | 71 % | 28 % |
| C | 71 % | 27 % |
| D | 67 % | 25 % |

### Exemple 7

Le pot catalytique E est monté à 0,80 mètre du collecteur, sur la ligne d'échappement d'un moteur à allumage commandé de cylindrée 1,9 l fonctionnant en régulation bouclée de richesse.

Les performances du pot catalytique sont déterminées par la mesure des conversions du monoxyde de carbone (CO), des oxydes d'azote (NOₓ) et des hydrocarbures (HC) au travers du pot catalytique, le moteur fonctionnant en conditions stationnaires à un régime de 2500 t/min et une puissance de 10 kW. La température des gaz d'échappement est de 530°C à l'entrée du catalyseur. Les conversions sont calculées à partir des concentrations mesurées en amont et en aval du pot catalytique à l'aide d'un analyseur infra-rouge pour le CO, d'un analyseur à chimiluminescence pour les NOₓ et d'un analyseur à ionisation de flamme pour les HC.

Le tableau suivant indique les conversions de CO, NOₓ et HC.

| Polluant | CO | NOₓ | HC |
|---|---|---|---|
| Conversion | 98 % | 85 % | 96 % |

Ces performances sont très bonnes compte tenu de la petite taille du pot catalytique.

## Revendications

1. Procédé de préparation d'un catalyseur comprenant un assemblage d'au moins un fil qui comprend au moins, en % poids, entre 60 et 90 % de fer, entre 10 et 25 % de chrome, et jusqu'à 10 % de préférence jusqu'à 6% d'aluminium, au moins un métal choisi dans le groupe formé par le platine, le rhodium, le palladium, le ruthénium, l'iridium, l'or et l'argent ayant été déposé sur l'assemblage, le contour extérieur de la section du fil étant inclus dans la couronne dont l'aire est comprise entre un cercle de diamètre 90 µm et un cercle de diamètre 5 mm, la longueur du fil étant au moins égale à 20 cm, et l'assemblage étant solidaire mécaniquement, ledit procédé étant caractérisé en ce que au moins une partie de l'assemblage est soumis, préalablement à sa formation, à un dépôt d'aluminium suivi d'un re-tréfilage, de manière à enrober ledit fil d'une couche de 10 à 50 µm d'aluminium, l'aluminium ainsi déposé étant au moins en partie transformé en alumine.

2. Procédé selon la revendication 1 tel que l'assemblage est enduit avant le dépôt de métal ou au cours dudit dépôt, la couche d'enduction étant constituée principalement d'au moins un composé choisi dans le groupe formé par les oxydes d'aluminium, les oxydes de cérium, les oxydes de titane, les oxydes de silicium, les oxydes de vanadium et éventuellement comprenant au moins un composé d'un élément choisi dans le groupe formé par le lanthane, le baryum, le fer et le zirconium.

3. Procédé selon l'une des revendications 1 et 2 tel que l'assemblage est soumis, préalablement à l'étape de dépôt de métal de la revendication 1 ou à l'étape d'enduction de la revendication 2, à la succession d'étapes suivante :
a) au moins un assemblage est enroulé de manière à obtenir au moins un cylindre
b) au moins un cylindre subit un traitement visant à transformer au moins une partie de l'aluminium présent en alumine
c) au moins un cylindre contenant de l'alumine est introduit dans un tube
d) l'assemblage contenu dans le tube est rendu cohérent par une au moins des opérations suivantes : brasage, soudage ou frittage.

4. Procédé selon l'une des revendications 1 et 2 tel que l'assemblage est soumis, préalablement à l'étape de dépôt de métal de la revendication 1 ou à l'étape d'enduction de la revendication 2, à la succession d'étapes suivante :
a) au moins un assemblage est enroulé de manière à obtenir au moins un cylindre
b) au moins un cylindre est introduit dans un tube
c) l'assemblage présent dans le tube est rendu cohérent par l'une au moins des opérations suivantes : brasage, soudage ou frittage
d) l'assemblage présent dans le tube subit un traitement visant à transformer au moins une partie de l'aluminium présent en alumine.

5. Procédé selon l'une des revendications 3 et 4 tel que l'on procède à une étape intermédiaire supplémentaire de compression du cylindre au milieu des deux étapes successives choisies dans le groupe formé par : les étapes a) et b) de la revendication 3, les étapes a) et b) de la revendication 4.

6. Procédé selon l'une des revendications 1 à 5 tel que la confection de l'assemblage est au moins partiellement un tricotage ou un tissage.

7. Catalyseur tel qu'obtenu par un procédé selon l'une des revendications 1 à 6.

8. Procédé de combustion catalytique caractérisé en ce qu'on utilise un catalyseur selon la revendication 7.

9. Procédé de post combustion catalytique de gaz d'échappement de moteurs à combustion interne, caractérisé en ce qu'on utilise un catalyseur selon la revendication 7.

## Claims

1. A process for preparing a catalyst comprising an assembly of at least one wire that comprises, by weight, about 60 to 90% iron, about 10 to 25% chromium, and up to about 10%, aluminium, at least one metal selected from the group formed by platinum, rhodium, palladium, ruthenium, iridium, gold or silver having been deposited on the assembly, the outside contour of the cross-section of the wire being included in a ring whose area is between a circle with about a 90 µm diameter and a circle with about a 5 mm diameter, the length of the wire being at least equal to about 20 cm, and the assembly being mechanically integral, said process being characterized in that at least a part of the assembly is subjected, before its formation, to a depositing of aluminium followed by redrawing, so as to coat said wire with an aluminium layer of from 10 to 50 µm thickness, the aluminium so deposited being at least in part transformed to alumina.

2. A process according to claim 1, wherein the assembly is coated before or during metal deposition, the coating layer consisting mainly of at least one compound selected from the group formed by the aluminium oxides, cerium oxides, titanium oxides, silicon oxides, vanadium oxides and further optionally comprising at least one compound of an element selected from the group formed by lanthanum, barium, iron and zirconium.

3. A process according to one of claims 1 and 2, wherein the assembly is, prior to the metal depositing step of claim 1 or to the coating step of claim 2 subjected to the following succession of steps:
a) at least one assembly is wound so as to obtain at least one cylinder,
b) at least one cylinder is treated to transform at least a portion of the aluminium present into alumina,
c) at least one cylinder containing alumina is introduced into a tube,
d) the assembly contained in the tube is rendered coherent by brazing, soldering or sintering.

4. A process according to one of claims 1 and 2, wherein the assembly is, prior to the metal depositing step of claim 1 or to the coating step of claim 2, subjected to the following succession of steps:
a) at least one assembly is wound so as to obtain at least one cylinder,
b) at least one cylinder is introduced into a tube,
c) the cylinder present in the tube is rendered coherent by brazing, soldering or sintering,
d) the assembly present in the tube is treated to transform at least a portion of the aluminium present into alumina.

5. A process according to one of claims 3 and 4, wherein an additional intermediate step of compression of the cylinder is effected between the two successive steps selected from the group formed by steps (a) and (b) in claim 3, and steps (a) and (b) in claim 4.

6. A process according to one of claims 1 to 5, wherein the production of the assembly is at least partially a knitting or a weaving.

7. A catalyst obtained by a process according to one of claims 1 to 6.

8. A process of catalytic combustion characterized in that a catalyst according to claim 7 is used.

9. A process of catalytic post-combustion of exhaust gases of internal combustion engines, characterized in that a catalyst according to claim 7 is used

## Patentansprüche

1. Verfahren zur Herstellung eines Katalysators, der einen Verband oder eine Vereinigung aus wenigstens einem Draht oder Faden umfaßt, der wenigstens, ausgedrückt in Gew.%, zwischen 60 und 90 % Eisen, zwischen 10 und 25 % Chrom und bis zu 10 %, bevorzugt bis zu 6 % Aluminium umfaßt, wobei wenigstens ein Metall, gewählt aus der durch Platin, Rhodium, Palladium, Ruthenium, Iridium, Gold und Silber gebildeten Gruppe auf dem Verband abgeschieden wurde und der Außenumfang des Radquerschnitts in den Kranz eingeschlossen wurde, dessen Bereich oder Fläche zwischen einem Kreisdurchmesser von 90 um und einem Durchmesser von 5 mm liegt, wobei die Länge des Drahtes wenigstens 20 cm beträgt und der Verband mechanisch fest ist, dadurch gekennzeichnet, daß wenigstens ein Teil des Verbandes vor seiner Formierung einer Aluminiumabscheidung, gefolgt von einem Drahtnachziehen ausgesetzt wird, derart, daß dieser Draht mit einer Schicht von 10 bis 50 µm Aluminium umhüllt wird, wobei das so abgeschiedene Aluminum wenigstens zum Teil in Aluminiumoxid umgeformt wurde.

2. Verfahren nach Anspruch 1, derart, daß der Verband vor oder während dieser Metallabscheidung beschichtet wird, wobei die Beschichtungsschicht gebildet wird hauptsächlich durch eine Verbindung aus der Gruppe, die gebildet wird durch die Oxide des Aluminiums, die oxide des Cers, die oxide des Titans, die oxide des Siliziums, die Oxide des Vanadiums und gegebenenfalls wenigstens eine Verbindung eines Elements umfaßt, das aus der durch Lanthan, Barium, Eisen und Zirkon gebildeten Gruppe gewählt wird.

3. Verfahren nach einem der Ansprüche 1 und 2, derart, daß der Verband vor der Metallabscheidungsstufe des Anspruchs 1 oder der Beschichtungsstufe des Anspruchs 2 nachstehender Aufeinanderfolge von Stufen ausgesetzt wird:
a) wenigstens ein Verband oder eine Vereinigung wird derart gewickelt, daß wenigstens ein Zylinder erhalten wird;
b) wenigstens ein Zylinder erfährt eine Behandlung, die darauf gerichtet ist, wenigstens einen Teil des im Aluminium vorhandenen Aluminiumoxids umzuformen;
c) wenigstens ein Aluminiumoxid enthaltender Zylinder wird in ein Rohr eingeführt und
d) der im Rohr enthaltene Verband wird kohärent durch wenigstens eine der folgenden Maßnahmen gemacht: Löten, Schweißen oder Sintern.

4. Verfahren nach einem der Ansprüche 1 und 2, derart, daß der Verband vor der Stufe der Abscheidung des Metalls nach Anspruch 1 oder der Stufe der Beschichtung nach Anspruch 2, der Aufeinanderfolge der nachstehenden Stufen ausgesetzt wird:
a) wenigstens ein Verband wird derart gewickelt, daß man wenigstens einen Zylinder erhält;
b) wenigstens ein Zylinder wird in ein Rohr eingeführt;
c) der im Rohr vorhandene Verband wird durch wenigstens eine der folgenden Maßnahmen kohärent gemacht: Löten, Schweißen oder Sintern; und
d) der im Rohr vorhandene Verband erfährt eine Behandlung, die dazu dient, wenigstens einen Teil des im Aluminium vorhandenen Aluminiumoxids umzuformen.

5. Verfahren nach einem der Ansprüche 3 und 4, derart, daß man eine zusätzliche Zwischenstufe der Kompression des Zylinders innerhalb der zwei aufeinanderfolgenden Stufen vornimmt, die gewählt sind aus der durch die Stufen a) und b) des Anspruchs 3, die Stufen a) und b) des Anspruchs 4 gebildeten Gruppe.

6. Verfahren nach einem der Ansprüche 1 bis 5, derart, daß die Herstellung des Verbandes wenigstens zum Teil ein Wirken oder ein Weben ist.

7. Katalysator, erhalten nach dem Verfahren eines der Ansprüche 1 bis 6.

8. Katalytisches Verbrennungsverfahren, dadurch gekennzeichnet, daß man einen Katalysator gemäß Anspruch 7 verwendet.

9. Verfahren zur katalytischen Nachverbrennung von Austrittsgasen von Brennkraftmaschinen, dadurch gekennzeichnet, daß man einen Katalysator gemäß Anspruch 7 verwendet.
